# EUROPEAN PATENT APPLICATION

(11) **EP 4 159 699 A1**
(43) Date of publication of application: **05.04.2023**
(21) Application number: 21200158.0
(22) Date of filing: 30.09.2021
(51) Int. Cl.: C04B 7/147, C04B 103/00, C04B 5/06

(54) **SUPPLEMENTARY CEMENTITIOUS MATERIALS, AND MANUFACTURING AND USE THEREOF**

(71) Applicant: Boliden Commercial AB, 10135 Stockholm (SE)
(72) Inventor: Roos, Åke, Stockholm (SE)
(74) Representative: AWA Sweden AB

(57) **Abstract**

The present invention relates to a supplementary cementitious material (SCM. The composition of the SCM is, on a dry basis, iron silicate having the chemical formula 2FeO·x SiO₂, where x is 1.05-2.50, the iron silicate being the balance of the supplementary cementitious material; 0-4 % by weight of aluminium comprised in aluminium containing compounds, preferably 2-4% by weight, and 0-7 % by weight of chain breaking elements,
wherein the chain breaking elements are selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof; 0-4 % by weight of trace elements and/or naturally occurring impurities, wherein the supplementary cementitious material has a weight ratio of iron from the iron silicate to silicon of the iron silicate and aluminium from the aluminium containing compounds, Fe:(Si and Al), of 1.7-5.0. The present invention also relates to a construction material comprising the SCM, a method for producing the SCM and to a use of the SCM in cement production.

## Description

### Technical field

The present invention is related to supplementary cementitious materials (SCM), a cementitious material, a method for producing the SCM, and the use of the SCM in cement production.

### Background

Cement is used for constructions worldwide. Cement is a dependable construction material, and the construction industry is dependable on it. However, there are drawbacks with the usage of cement as the cement industry is facing increasing problems. The cement industry is a large carbon dioxide emitter. The overall process, which includes initial calcination reaction where limestone chemically breaks down to calcium oxide (CaO), is responsible for a substantial part of global carbon dioxide (CO₂) emissions. Moreover, the cement kilns in which the reaction occurs is typically fueled by coal or petroleum coke. As a result, the production of cement is a major contributor to climate change.

There is thus a need to find new ways to better make use of the Earth's finite resources, and lower the environmental impact by decreasing the CO₂ emissions.

### Summary

Calcium oxide is a key ingredient for the process of making cement. The present invention provides solutions to decrease the usage of calcium oxide in construction materials comprising cement. An object of the present invention is to provide a way to lower the carbon dioxide footprint associated with construction and binder materials such as cement, concrete, and mortar, respectively. This and other objects, that will become apparent in the following, are accomplished by a supplementary cementitious material (SCM) comprising, on a dry basis,
iron silicate having the chemical formula 2FeO·x SiO₂, where x is 1.05-2.50, the iron silicate being the balance of the supplementary cementitious material,
0-4 % by weight of aluminium comprised in aluminium containing compounds, preferably 2-4% by weight, and
0-7 % by weight of chain breaking elements,
   wherein the chain breaking elements are selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof,
0-4 % by weight of trace elements and/or naturally occurring impurities, wherein
the supplementary cementitious material has a weight ratio of iron from the iron silicate to silicon of the iron silicate and aluminium from the aluminium containing compounds, Fe:(Si and Al), of 1.7-5.0.

The inventor has found that the supplementary cementitious material (SCM) product of the invention can replace at least part of the calcium oxide (CaO) in materials such as cement or similar binders or construction materials, without compromising the mechanical properties of the binder or construction material. This is advantageous in that it can reduce the carbon footprint of the material. The chemical breakdown of limestone in the production of calcium oxide is responsible for a large portion of the carbon dioxide emissions associated with cement. The SCM product of the invention can be produced with a significantly lower carbon footprint than CaO, as the chemical breakdown of limestone to CaO can be avoided.

Herein, the term "supplementary cementitious material (SCM)" refers to an inorganic material that contributes to the properties of a cementitious mixture through hydraulic or pozzolanic activity, or both. SCM products are known to the skilled person in the art and includes ground granulated blast furnace slag (GGBFS), a by-product of the iron industry, and fly ash, a by-product of coal combustion in power plants, and silica fume. SCM can be used individually with Portland or blended cement or in different combinations.

Herein, the term "cementitious material" refers to an inorganic material or a mixture of inorganic materials that sets and develops strength by chemical reaction with water by formation of hydrates. Portland cement is the most commonly used cementitious material in industry today is defined by the European Standard EN 197-1 as a hydraulic material which shall consist of at least two-thirds by mass of calcium silicates, (3 CaO·SiO₂, and 2 CaO·SiO₂), the remainder consisting of aluminium- and iron-containing clinker phases and other compounds. The ratio of CaO to SiO₂ shall not be less than 2.0. The magnesium oxide content (MgO) shall not exceed 5.0% by mass.

By replacing at least part of the Portland cement used in industry today, carbon dioxide emissions associated with conversion of limestone to calcium oxide can be avoided. A further reason for the lower carbon footprint of the inventive SCM is that the SCM can be obtained as a by-product, from slag formed in smelters in the extraction of non-ferrous element from sulphide ores. The non-ferrous elements may for example be any one of Lead (Pb), Zinc (Zn), Copper (Cu), Silver (Ag), Gold (Au) and Nickel (Ni). Such slags typically comprise iron silicates. By treating said iron silicates in a controlled cooling process, an iron silicate having the chemical formula 2FeO·x SiO2, where x is 1.05-2.50 can be obtained. The inventors have shown that such iron silicate material can advantageously be utilized in a SCM material. By replacing at least part of the calcium oxide of conventional cement (or similar materials) with the inventive SCM material, the carbon footprint of the cement can be significantly reduced.

Furthermore, the iron silicate in the inventive SCM has been found to form silicate chains, which positively influences cementitious properties of the SCM.

However, it is equally conceivable that the components of the SCM are mined and sourced from virgin sources. In this case also, the SCM exhibits a lower carbon footprint than conventional CaO containing cement, since the initial chemical breakdown of limestone to CaO can be avoided.

Similarly, the inventive SCM material contains a lower amount of CaO than other SCM materials, such as for example ground granulated blast furnace slag (GGBS). In GGBS, CaO is the active ingredient.

Preferably, the SCM comprises 93-100 % by weight of iron silicate having the chemical formula 2FeO·x SiO2.

In the present invention, the amount, by weight, of CaO and other so-called "chain-breaking elements" is in the range of from 0-7 %. The chain-breaking elements are selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof. Such chain-breaking elements have been found to reduce the length of silicate chains in the SCM, which has been found to have a negative impact on the surface activity of the SCM material.

The SCM of the present invention may furthermore comprise 0-4 % by weight of aluminium comprised in aluminium containing compounds. It is contemplated that the aluminium acts as a chain-forming element, thereby contributing to the formation of silicate chains in the SCM material, which has been found to have a positive impact on the surface activity of the SCM material.

The SCM of the present invention has a weight ratio of iron from the iron silicate to silicon of the iron silicate and aluminium from the aluminium containing compounds, Fe:(Si and Al), of 1.7-5.0. The provision of SCM with an over stochiometric Si content, has been found to positively influence the surface activity of the SCM material.

The SCM of the present invention has an amount of oxygen present in the supplementary cementitious material in the range of 28-45 % by weight of the supplementary cementitious material, on a dry basis. This has also been found to positively influence the surface activity of the SCM material. Stated differently, this means that only a minor amount of the iron in the SCM is present as metallic iron or in compounds close to metallic Fe. This is explained in more detail below.

The SCM material of the present invention has been shown to exhibit a high degree of pozzolanicity. Herein, term "pozzolanicity" refers to the SCM material's hydraulic, or pozzolanic, activity and relates to the ability of the SCM material to combine with lime in the presence of water to form a cement. Such activity can be studied by for example by the R3 ("Rapid, Relevant and Reliable") Rilem test described herein, in which isothermal calorimetry is used to determine the heat of hydration of hydrating pastes composed of the SCM, calcium hydroxide and an alkali activator. The heat of hydration value is used to determine the hydraulic reactivity of the SCM. The hydraulic activity exhibited by the SCM of the present invention makes the SCM suitable for use in cement.

It is contemplated that the composition of the iron silicate allows for a solidification process which yields an iron silicate with high entropy. The high entropy increases the surface activity, which can be studied by measuring the pozzolanicity of the SCM. Consequently, by providing a SCM comprising iron silicate having the chemical formula 2FeO·x SiO2, where x is 1.05-2.50, by weight of iron silicate having the chemical formula 2FeO·x SiO2, where x is 1.05-2.50, a SCM highly suitable for use in cement is provided.

The addition of an aluminium containing material, such that aluminium content of the SCM is less than 4 %, by weight, has been found to positively influence the surface activity of the material, owing to the silicate chain building properties of the aluminium, and to that aluminium, as well as silicon, takes an active part in cement reactions, when the SCM is utilized in a cementitious material. By simultaneously keeping the chain breaking elements in the SCM to less than 7 % by weight, a highly surface active SCM with relatively long silicate chains can be obtained. The aluminium containing materials of the present invention enhance the possibility to have high surface reactivity in the SCM material, obtained by transforming from liquid to solid state during manufacturing of the SCM product. Increased surface reactivity resulting in improved pozzolanicity and better cementitious properties of the SCM product. Consequently, it has been found that the inventive SCM can be utilized to replace at least part of the CaO conventionally present in cement with maintained mechanical properties.

In the SCM, it may be impossible to avoid naturally occurring impurities and/or other trace elements Therefore, the SCM may comprise 0-4 % by weight of trace elements and/or naturally occurring impurities. Aluminium containing compounds and chain breaking elements shall not be included as naturally occurring impurities and/or trace elements, as the amounts of these compounds are specifically defined in the inventive SCM. Consequently, the SCM may comprise 0-4 % by weight of trace elements and/or naturally occurring impurities other than the chain breaking elements and the aluminium containing compounds as defined herein. Preferably, the SCM comprises 0-3 % by weight of trace elements and/or naturally occurring impurities, such as 0-2 % by weight of trace elements and/or naturally occurring impurities, such as 0-1 % by weight of trace elements and/or naturally occurring impurities. However, since such elements may be difficult to avoid, the SCM may comprise 0.1-4 % by weight of trace elements and/or naturally occurring impurities, such as 0.1-3 % by weight of trace elements and/or naturally occurring impurities, such as 0.1-2 % by weight of trace elements and/or naturally occurring impurities, such as 0.1-1 % by weight of trace elements and/or naturally occurring impurities

An example of a naturally occurring impurities and/or other non-reactive species as defined herein is chromium containing compounds, such as chromium(II) oxide (CrO) and/or chromium(III) oxide (Cr₂O₃). Other examples include cobalt containing compounds, such as Cobalt(II) oxide (CoO), cobalt(III) oxide (CO₂O₃), and/or cobalt(II,III) oxide (CO₃O₄) It is contemplated that an addition 0-4 % of naturally occurring impurities and/or other trace elements species does not negatively impact the surface activity of the SCM. Consequently, it has only limited impact the properties of the SCM making it suitable for use in construction materials.

In embodiments, there is provided a supplementary cementitious material (SCM) consisting of, on a dry basis,
iron silicate having the chemical formula 2FeO·x SiO₂, where x is 1.05-2.50, the iron silicate being the balance of the supplementary cementitious material,
0-4 % by weight of aluminium comprised in aluminium containing compounds, preferably 2-4% by weight, and
0-7 % by weight of chain breaking elements,
   wherein the chain breaking elements are selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof,
0-4 % by weight of trace elements and/or naturally occurring impurities, wherein
the supplementary cementitious material has a weight ratio of iron from the iron silicate to silicon of the iron silicate and aluminium from the aluminium containing compounds, Fe:(Si and Al), of 1.7-5.0.

In embodiments, the amount of oxygen present in supplementary cementitious material in the range of 28-45 %, such as 29-42 %, preferably 30-40 %, preferably 30-36 %, preferably 31-36 %, preferably 31-35 % by weight of the supplementary cementitious material, on a dry basis. The oxygen present in the SCM may originate from the iron silicate, from the aluminium containing compound, from the chain breaking elements and/or from the naturally occurring impurities and/or other non-reactive species.

Expressed differently, no more 2 % by weight of the total iron in the SCM material is present as metallic iron.

In embodiments, x of the chemical formula 2FeO·xSiO₂ is 1.05- 2.00, preferably 1.15-2.00, preferably 1.30-2.00, and preferably 1.45-2.00. Such stoichiometry of the iron silicate has proven advantageous in that it may provide for the formation of amorphous phase, surface active SCM, in particular when the material is formed from a melt, such as a slag melt.

In embodiments, the iron silicate comprises fayalite. Fayalite (2FeO·SiO₂) is the iron-rich end-member of the olivine solid-solution series. Fayalite can be obtained from slag formed in smelters in the extraction of non-ferrous element from sulphide ores. Consequently, fayalite can be obtained as a by-product from the mining and mineral processing industry. Naturally occurring fayalite typically crystallizes in the orthorhombic system (space group Pbnm) with cell parameters a 4.82 Å, b 10.48 Å and c 6.09 Å. The SCM of disclosed herein may have been obtained from a melt comprising stochiometric fayalite and additional SiO₂.

In embodiments, the weight ratio of iron from the iron silicate to silicon of the iron silicate and aluminium from the aluminium containing compounds, Fe:(Si and Al), is 1.8-4.6, preferably 1.8-4.4, preferably 1.8-4.2, preferably 1.8-4.0, preferably 1.8-4.0, preferably 1.8-3.9, and preferably 1.8-3.8, and preferably 1.8-3.5.

The inventors have found that the weight ratio Fe:(Si and Al) in the SCM influences the surface activity of the SCM. By providing a composition being silica (and aluminium, if present) over-stochiometric to iron, a highly surface active material can be obtained. It is contemplated that surface activity is at least partially owing to that the compositions can avoid eutectic and stochiometric points in the phase diagram during solidification. Such solidification yields a highly surface active SCM at least partly due to the increased entropy of the SCM. The surface activity can be approximated by the pozzolanicity of the SCM. Consequently, the SCM of the present disclosure may advantageously be obtained from a melt by quenching.

In some embodiments, the chain breaking elements are present in the SCM in an amount of at most 6 % by weight based on the total amount of supplementary cementitious material, preferably at most 5 % by weight, preferably at most 4 % by weight, preferably at most 3.5 % by weight, preferably at most 3 % by weight, based on supplementary cementitious material.

By providing no more than a low amount of chain breaking elements in the SCM, relatively long silicate chains can be obtained. When the iron silicate is obtained from a slag, chain breaking elements are typically present in the slag. Consequently, a small amount of chain breaking elements are typically present in the SCM as impurities, in an amount of at most 7 % by weight.

The chain breaking elements may be present in the SCM in amount of 0.1 %-7 %, such as of 0.1 %-6, such as of 0.1 %-5 %, such as of 0.1 %-4 %, such as of 0.1 %-3 %, such as of 0.1 %-2 %, such as of 0.1 %-1 %, by weight based on the total amount of supplementary cementitious material.

In embodiments, the chain breaking elements present in the SCM comprises CaO, and the chain breaking elements is present in the SCM in amount of 0.1 %-7 %, such as of 0.1 %-6, such as of 0.1 %-5 %, such as of 0.1 %-4 %, such as of 0.1 %-3 %, such as of 0.1 %-2 %, such as of 0.1 %-1 %, by weight based on the total amount of supplementary cementitious material. In some embodiments, the amount of CaO in the supplementary cementitious material may be in an amount of 0.1 %-7 %, such as of 0.1 %-6, such as of 0.1 %-5 %, such as of 0.1 %-4 %, such as of 0.1 %-3 %, such as of 0.1 %-2 %, such as of 0.1 %-1 %, by weight based on the total amount of supplementary cementitious material.

The inventor has found that addition of CaO in the SCM allows for the Fe: (Si and Al) ratio in the SCM material to be lower. It is contemplated that an addition of CaO in an amount of 0.1 %-7 % by weight of the SCM allows for an increased amount of Si in the SCM without risking tridymite precipitations in the material, resulting in maintained entropy and increased content of active elements in the cement reaction. A higher amount of Si is advantageous in that it further increases the potential for chemical bonding in the SCM, increasing the surface activity of the SCM. It has been found that additions of CaO as disclosed above allows for the ratio Fe: (Si and Al) to be in the range of 1.7-4.0, preferably 1.7-4.0, preferably 1.7-3.9, and preferably 1.7-3.8, and preferably 1.7-3.5.

It is further contemplated that any negative effect on the surface activity of the SCM caused by the addition of a low amount of CaO as defined above is compensated by that said addition allows for an increased content of Si in the SCM, without risking unwanted precipitations.

In embodiments, aluminium comprised in aluminium containing compounds are present in an amount of 0.1 %-4 %, such as of 0.5 %-4, such as of 1 %-4 %, such as of 1.5 %-4 %, such as of 2 %-4 %, by weight based on the total amount of supplementary cementitious material. An amount of aluminium comprised in aluminium containing compounds of 2-4 % by weight of the SCM has proven particularly advantageous.

In some embodiments, said aluminium containing compound is aluminium oxide (Al₂O₃). Aluminium oxide may be naturally present in iron silicate slags.

In some embodiments, the supplementary cementitious material has an amorphous content of at least 95 % by weight, preferably at least 97% by weight, preferably at least 98% by weight, most preferably at least 99 %, on a dry basis, measured using X-ray diffraction (XRD).

Determining the amorphous content in a solid material by XRD is known to the person skilled in the art. It is contemplated that a high amount of amorphous material at least partly contributes to the high surface activity of the SCM, exhibited by the high pozzolanicity of the SCM. Since the SCM is preferably formed from a quenching reaction, a high degree of amorphous phase can be obtained. In particular since the iron silicate is silicon overstoichiometric, allowing for the formation of a highly surface active, amorphous SCM.

In some embodiments, the supplementary cementitious material is a solid. The solid material may have been formed by solidification from a melt.

In some embodiments, the supplementary cementitious material is in the form of a granulate, a powder, or any combination thereof.

Herein, the term "powder" refers to a bulk solid, dry material that takes the form of ultra-fine particles that freely flow when tilted and shaken.

Herein, the term "granulate" refers to any granular material that is characterized by a very fine size of grain, such as of less than 500 µm.

Granulates and powder are easy to incorporate into a cementitious material, to replace at least part of the calcium oxide typically utilized in cementitious materials.

In some embodiments, the supplementary cementitious material has an average particle diameter (D50) of 1-70 µm, preferably 2-60 µm, preferably 5-50 µm preferably 8-50 µm, preferably 10-40 µm, preferably 10-30 µm, calculated on a weight basis using a Mastersizer laser diffraction instrument from Malvern Industries.

The particle size provides effects in the SCM as a desirable degree of fineness is advantageous for the material to be in a suitable reactive form to be used as supplementary cementitious material.

In some embodiment, at most 10 % by weight of the supplementary cementitious material has a particle diameter below 5 µm, preferably at most 8 % by weight of the supplementary cementitious material has a particle diameter below 5 µm, at most 6 % by weight of the supplementary cementitious material has a particle diameter below 5 µm calculated on a weight basis, at most 4 % by weight of the supplementary cementitious material has a particle diameter below 5 µm, the particle size measured by using a Mastersizer laser diffraction instrument from Malvern Industries.

When the particle volume approaches infinite volume the entropy effects decline faster than the positive effect from increased exposed surface. Consequently, it is preferred if no more than 10 % by weight of the supplementary cementitious material has a particle diameter below 5 µm

In some embodiments, the supplementary cementitious material in the form of a granulate, or a powder has a BET specific surface area (SSA) of at least 0.5 m²/g, preferably 0.5-2 m²/g, preferably 0.55-1.9 m²/g, preferably 0.6-1.8 m²/g, such as 1-2 m²/g, such as 1.5-2 m²/g, such as 1.6-1.9 m²/g as measured by gas adsorption according to the BET-method described herein using a TriStar 3000 from Micromeritics.

In some embodiments, the supplementary cementitious material in the form of a granulate, or a powder has a pozzolanicity of at least 52 mJ/g, preferably at least 55 mJ/g, preferably at least 58 mJ/g, preferably at least 60 mJ/g, preferably at least 62 mJ/g, preferably at least 70 mJ/g , preferably at least 90 mJ/g, such as at least 100 mJ/g of said supplementary cementitious material, according to RILEM R3 (Rapid, Relevant, and Reliable), measured using isothermal calorimetry measurement. A high pozzolanicity indicates that the SCM is suitable for replacing CaO in cementitious materials. It is contemplated that the high degree of pozzolanicity exhibited by the inventive SCM is owing to a high entropy in the SCM. The SCM of the present invention may have been provided with a high degree of entropy owing its stoichiometry and Fe: (Al and Si) ratio, in combination with a controlled solidification process. A high entropy increases surface reactivity resulting in improved pozzolanicity and better cementitious properties of the SCM product.

The objects of the invention are also accomplished by cementitious material comprising a supplementary cementitious material as described herein and CaO. The SCM may replace at least part of the CaO conventionally used in cementitious materials such as Portland cement, Portland composite cement comprising at least 65 wt% Portland cement; Portland blast-furnace slag cement; and Portland-fly ash cement.

The SCM of the present invention can preferably be utilized in a cementitious material to replace at least part of the CaO commonly present in conventional cement, such as Portland cement. Consequently, the carbon footprint of such cementitious material can be lowered, as compared to conventional Portland cement.

In embodiments, the cementitious material further comprises an activator selected from the group consisting of sodium hydroxide, potassium hydroxide, sodium silicate, potassium silicate, aluminium sulfate (Al₂SO₄), or any combination thereof, preferably sodium hydroxide, and/or potassium hydroxide, preferably sodium hydroxide.

The cementitious material of the present invention may furthermore comprise an activator. However, one advantage of cementitious material comprising the SCM product described herein is that a high pozzolanicity can be obtained also without an activator.

The object of the invention is also accomplished by a method of producing a cementitious material comprising the steps of:
i. providing a supplementary cementitious material (SCM) as defined herein;
ii. providing a cement material comprising CaO, such as a Portland cement material;
iii. combining the (SCM) and the cement material.

Consequently, a cementitious material having a lower carbon footprint than Portland cement can be obtained, The SCM can be used to replace part of the CaO of ordinary Portland cement.

The step of combining may be followed by step of grinding. Alternatively, the SCM and the Portland cement are already provided as ground material.

The objects of the invention are also accomplished by a construction material comprising a supplementary cementitious material as described herein, a fluid and an aggregate material.

The SCM product of the present invention can advantageously be provided as a binder material in a construction material. The silicate chains in the SCM can be hydrated by a fluid and provide binder properties to the construction material. Consequently, a construction material with a relatively low carbon foot-print can be obtained, without compromising the mechanical properties of the construction material.

In some embodiments, the aggregate material is selected from the group consisting of gravel, crushed stone, sand, slag, recycled concrete and geosynthetic aggregates or any combination thereof.

The object of the invention is also accomplished by a method of producing supplementary cementitious material as described herein comprising the steps of:
- providing a melt at a temperature T1 in the range of 1200-1500 °C, the melt comprising iron silicate and optionally chain breaking elements being selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof;
- optionally providing an aluminium containing element to the melt;
- quenching the melt in a fluid, thereby solidifying the melt to form the supplementary cementitious material as defined herein.

The SCM of the present invention may advantageously be obtained from iron silicate containing slag, which slag may be obtained as a by-product from smelters in the extraction of non-ferrous element from sulphide ores. By quenching said slag such that the temperature of the slag is significantly lowered in a short period of time, a highly amorphous SCM with high surface activity can be obtained. However, it is equally conceivable that the SCM can be obtained by producing the iron silicate from virgin material.

Such slag typically contains unavoidable impurities in the form of chain breaking elements being selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof. It is preferred that the amount of the chain breaking elements is kept to a minimum. However, it is contemplated that the stoichiometry of the iron silicate, optionally in combination with formation by quenching can compensate for an amount of chain breaking elements of up to 7 %, such that the inventive SCM can be obtained nevertheless.

Alternatively, the compounds in the melt may have been obtained from virgin materials.

In embodiments, wherein the quenching is performed for a time period t1, during which time period t1 the temperature of the slag is lowered from temperature T1 to a temperature T2 of less than 100 °C.

Based on the composition of the iron silicate present in the slag, the skilled person can select a quenching protocol such that an amorphous SCM can be obtained.

In embodiments, the method may further comprise a step of milling the solidified melt to obtain a suitable particle size.

In embodiments, wherein the time period t1 is less than 10 minutes, such as less than 5 minutes, such as less than 3 minutes, such as less than 1 minute, such as less than 30 seconds, such as less than 10 seconds. The time t1 may be in the range of from 0.01 seconds to 30 seconds.

The object of the invention is also accomplished by a method of producing a construction material comprising the steps of:
i. providing a cementitious material comprising the supplementary cementitious material as defined herein, and an aggregate material, and optionally an aqueous fluid;
ii. providing a mixture by mixing said cementitious material with the aggregate material,
iii. optionally contacting the mixture with the aqueous fluid, and
iv. allowing the mixture to set, and harden to form said construction material.

The inventive SCM can be incorporated into conventional processes for producing construction materials such as concrete, as a cementitious material in which the SCM has replaced at least part of the calcium oxide conventionally used in e.g. Portland cement.

Preferably, the mixture is contacted with a liquid such as water after which further mixing is performed.

In some embodiments, the setting and hardening of step iv) is performed under the influence of air, or other carbon dioxide containing gas.

In some embodiments, wherein the aqueous liquid is water.

The objects of the invention are also accomplished by a use of the supplementary cementitious material as described herein in cement production.

The SCM of the present invention has proven suitable for use in cement production, for example by replacing at least part of the CaO present in conventional Portland cement. The inventor has found that this use does not negatively impact the mechanical and binder properties of the cement. Advantageously, such use can reduce the carbon footprint of the cement material, as the inventive SCM can be produced with a lower carbon footprint than conventional CaO-based cement. Consequently, the SCM can be readily incorporated into cement or similar binder products.

The objects of the invention are also accomplished by a use of supplementary cementitious material as described herein in construction material production.

As discussed above, the SCM can readily be utilized in a binder material in the production of a construction material.

In embodiments, the construction material can be concrete, mortar, plaster, or screed. Such materials are known to the person skilled in the art.

The objects of the invention are also accomplished by a use of supplementary cementitious material as defined herein, as a replacement for calcium oxide containing materials.

The objects of the invention are also accomplished by a use of supplementary cementitious material as defined herein as a replacement for calcium oxide containing materials in cement, concrete or construction materials.

In embodiments, the calcium oxide containing compounds are selected from the group consisting of calcium oxide (CaO); calcium silicates, such as dicalcium silicate (2CaO·SiO₂), tricalcium silicate (3CaO·SiO₂); calcium aluminates, such as tricalcium aluminate (3CaO.Al₂O₃), dodecacalcium hepta-aluminate, (12CaO·7Al₂O₃), monocalcium aluminate, (CaO·Al₂O₃), monocalcium dialuminate (CaO·2Al₂O₃), monocalcium hexa-aluminate, CaO·6Al₂O₃); Brownmillerite (4CaO·Al₂O₃·Fe₂O₃); or any combination thereof.

In embodiments, the calcium oxide containing compounds are selected from Portland cement, ground-granulated blast-furnace slag (GGBS), slag from non-ferrous metal production, or other calcium oxide containing slags, or any combination thereof.

In embodiments, wherein 5-70 % by weight of the calcium oxide in said calcium oxide containing materials is replaced by said supplementary cementitious material to obtain a cement, concrete or construction material. Preferably 10-65% by weight, such as 20-65% by weight, such as 40-65% by weight, on a dry basis, is replaced by said supplementary cementitious material to obtain a cement, concrete or construction material.

In embodiments, 5-70 % by weight of calcium oxide present in Portland cement, or Portland cement blends selected from the group consisting of Portland composite cement comprising at least 65 wt% Portland cement, Portland blast-furnace slag cement, and Portland-fly ash cement, and any combination thereof, is replaced by said supplementary cementitious material to obtain a cement. Preferably 10-65% by weight, such as 20-65% by weight, such as 40-65% by weight, on a dry basis, is replaced by said supplementary cementitious material to obtain a cement.

### Detailed description

### BET Method

The specific surface area was measured by BET (TriStar 3000 from Micromeritics). Approximately 5 g from each sample was placed in separate measuring tubes. Prior to the measurement, each sample tube was heated to degas the samples. This was made as follow: 1) Heating to 100°C (rate 20°C/min) 2) 60 min at 100°C 3) Cooling down to ambient.

All steps were made in a N₂ atmosphere. The sample masses were then precisely measured. The BET analysis was made by measuring the amount of adsorbed N₂ at seven different relative pressures.

### Pozzolanicity measurements (Rilem "R3" method)

Rilem "R3" method consists of an isothermal calorimetry study carried out on model mixes at 40°C. Those mixes are composed of clay, portlandite and gypsum, with the following proportions: portlandite-to-ash ratio is 3:1 and the addition of gypsum is calculated to have a SO₃/Aₗ₂O₃ molar ratio of 1. Finally, the powder is mixed with a 0.5 mol/l KOH solution to reach a water-to-solid ratio of 1. The heat flow was recorded at 40°C up to 7 days of hydration. The Rilem "R3" method is presented by Avet F, Snellings R, Alujas Diaz A, Ben Haha M, Scrivener K, in "Development of a new rapid, relevant and reliable (R3) test method to evaluate the pozzolanic reactivity of calcined kaolinitic clays". Cement and Concrete Research, Vol. 85, 2016, pp. 1-11.

### Examples

Synthetic slags of two different chemical compositions and three different thermal histories have been investigated. The compositions are comparative composition 1: 23 % addition of lime by weight of the composition, (Fe2SiO4+23% CaO); and inventive composition 2: stoichiometric fayalite with addition of 39 % silica by weight of the composition(Fe2SiO4+39% SiO2). The thermal histories are slow cooling in air, i.e., 5°C/minute, or quenching with water when the slag is 1400 °C or 1300 °C, respectively.

Tests and other activities conducted on the samples are listed in Table 1.

**Table 1. Work and analyses on the material**

| **Property/step** | **Method** |
|---|---|
| Particle size reduction | Milling, grinding |
| Phase identification with XRD | Powder-XRD |
| Bulk-chemical analysis | Micro-XRF on powder |
| Particle-size distribution | Laser diffraction |
| Specific surface | BET-analysis |
| Pozzolanicity | RILEM R3 |

### General material characterization

To enable testing and evaluation of the synthetic iron silicates as SCM, each sample was milled (some samples also crushed before milling), with a median grain-size of 20 µm as goal. Milling was conducted using a Retsch PM100 ball mill, set at 450 rpm rotational speed and 10 minutes milling time). The mill manages 20-25 g sample per run.

The properties of each synthetic slag and the processing details are summarized in Tables 2 and 3.

**Table 2. Nature of synthetic slags of comparative composition 1 and milling procedure**

| Sample | 1 | 2 | 3 |
|---|---|---|---|
| Composition | Fe₂SiO₄ + 23% CaO | Fe₂SiO₄ + 23% CaO | Fe₂SiO₄ + 23% CaO |
| Sample type | 3 | 3 | 3 |
| Cooling history | 5°C/min | 1300 °C | 1400 °C |
| Mass bag with sample (g) | 373.8 | 384.9 | 410.0 |
| Mass sample, without bag (g) | 359.4 | 404.2 | 357.8 |
| Initial crushing and milling | Hammered material to <4 mm. Crushed ca 20 mins. | Crushed ca 20 mins. | Crushed ca 23 mins. |
| Mass, before ball mill (g) | 355.4 | 378.8 | 396.9 |
| Conditions ball mill | 450 RPM, 10 mins | 450 RPM, 10 mins | 450 RPM, 10 mins |

**Table 3. Nature of synthetic slags of inventive composition 2 and milling procedure**

| Sample | 4 | 5 | 6 |
|---|---|---|---|
| Composition | Fe₂SiO₄ + 39% SiO₂ | Fe₂SiO₄ + 39% SiO₂ | Fe₂SiO₄ + 39% SiO₂ |
| Sample type | 4 | 4 | 4 |
| Cooling history | 5°C/min | 1300 °C | 1400 °C |
| Mass bag with sample (g) | 382.8 | 380.4 | 369.0 |
| Mass sample, without bag (g) | 357.8 | 372.9 | 361.6 |
| Initial crushing and milling | Hammered material to <4 mm. Crushed ca 20 mins. | Hammered some material. Crushed ca 20 mins. | Hammered some material. Crushed ca 20 mins. |
| Mass, before ball mill (g) | 356.9 | 369.9 | 358.1 |
| Conditions ball mill | 450 RPM, 10 mins | 450 RPM, 10 mins | 450 RPM, 10 mins |

### Phase identification by XRD

The degree of crystallinity was investigated on the six samples of synthetic slag.

A representative sample is grinded to a powder (<0.1 mm grain-size). A small subsample (ca 1 g) is mounted in the sample holder, where after holder with sample is placed in the instrument. The measurement is conducted by exposing the powder with X-rays of wavelength 1.5418 Å (copper filament), while sample holder and detector continuously are moved in relation to each other with the angle 2θ (each move synchronized with the angle θ), to collect X-rays that undergo diffraction and constructive interference. The output of the measurement is a so called diffractogram, in which constructive interferences are plotted as intensity peaks at the 2θ angles at which they occur, rising above a continuous spectrum (background noise).

The analysis was conducted using a Rigaku Miniflex 600 X-ray diffractometer and the analytic data were evaluated using the software PDXL and the database ICDD (PDF-4+ 2019 RDB). The samples were analysed in the 2θ range 3-73° with a continuous relative movement speed of 3°/minute.

Crystalline phases yield distinct peaks in the diffractogram, whereas lack of crystallinity yields broader and more indistinct peaks. A compilation of dominating phases identified from XRD-analysis for each synthetic slag is presented in Table 4.

Samples 2, 3, 5 and 6 all exhibited a high degree of amorphous phase.

The crystalline phases were identified using a function for "Auto ID", followed by a visual interpretation of the identified phases fit to the peaks in the diffractogram. Hereafter, an automatic search for crystalline phases was carried out by restricting the search to certain elements by aid of the chemical composition of the sample. As a final step, a manual search for crystalline phases was carried out with a set of plausible minerals in mind.

**Table 4. Phases present in the various samples.**

| **Sample** | **Dominating phase(s)** |
|---|---|
| 1 | Kirschsteinite (CaFeSiO4), wustite (FeO) |
| 2 | Wustite (FeO), magnetite (Fe3O4) |
| 3 | Wustite (FeO), magnetite (Fe3O4) |
| 4 | Fayalite (Fe2SiO4), tridymite (SiO2) |
| 5 | Fayalite (Fe2SiO4), tridymite (SiO2) |
| 6 | Fayalite (Fe2SiO4), tridymite (SiO2) |

### Particle-size distribution

The particle size distributions of the six samples, grinded for 10 minutes, were measured using a Mastersizer laser diffraction instrument from Malvern Instruments Ltd. For each of the samples, three subsamples were analyzed.

The results are shown in Table 5. The values shown for each sample are the average of the three individual subsample measurements. In Table 5, D[3;2] refers so Surface area moment mean whereas D[4;3] refers to the Volume moment mean. D[3;2] is most relevant when specific surface area is important (e.g. for reactivity or dissolution) and is the one that is most sensitive to the presence of fine particulates in the size distribution. On the other hand, D[4;3] is most relevant when the size of particles constituting the bulk of the sample volume is of interest. It is most sensitive to the presence of large particulates. Dx(10), Dx(50) and Dx(90) give the maximum particle size for different percentages of sample volume, i.e. at 10, 50 and 90 vol.%.

**Table 5. Particle-size distribution of grinded samples 1 to 6**

| **Sample** | **1** | **2** | **3** | **4** | **5** | **6** |
|---|---|---|---|---|---|---|
| Span | 2837 | 3304 | 3131 | 3445 | 3213 | 3277 |
| Uniformity | 0.921 | 1190 | 1002 | 1141 | 1004 | 1073 |
| D [3;2] (µm) | 5.92 | 9.03 | 8.49 | 5.68 | 9.24 | 9.67 |
| D [4;3] (µm) | 20.7 | 32.5 | 26.3 | 27.8 | 27.9 | 30.7 |
| Dx (10) (µm) | 2.38 | 3.54 | 3.35 | 2.16 | 4.00 | 4.05 |
| Dx (50) (µm) | 15.3 | 19.9 | 18.1 | 18.2 | 19.0 | 20.0 |
| Dx (90) (µm) | 45.8 | 69.4 | 60.1 | 64.7 | 65.0 | 69.7 |

As shown in Table 5, D90 value for all samples was in the range 45.8 to 69.7 µm, meaning that 90% of the particles were of the respective particle-size or smaller. Similarly, D50 value for all samples was in the range 15.3 to 20.0 µm, meaning that 50% of the particles were of respective size or smaller.

For all iso-chemical sample sets, the finest particle-size was in each case reached with the slow-cooled sample (cf. sample 1 with 2 and 3, and sample 4 with 5 and 6). The smallest difference between samples with different cooling history was observed for those with added silicon (samples 4-6); for these D50 only differs with 1-2 µm between slow-cooled and quenched samples.

Sample 1 was the only synthetic slag, that after 10 minutes of milling reached a particle-size comparable with commercial ground-granulated blast furnace slag (D50 ∼10-15 µm). The other samples reached a particle-size comparable with fly ash (D50 ∼20 µm).

### Specific surface (BET-value)

The specific surface area was measured by BET (TriStar 3000 from Micromeritics). Approximately 5 g of each sample were placed in separate measuring tubes. Prior to the measurement, each sample tube was heated in to degas the samples. This was made as follows:
1. Heating to 100°C (heating rate 20°C/min)
2. 60 min at 100°C
3. Cooling down to ambient temperature

All steps were made in a N₂ atmosphere. The sample masses were then precisely measured. The BET analysis was made by measuring the amount of adsorbed N₂ at seven different relative pressures, 3 samples at a time.

The results are presented in Table 6.

**Table 6. BET results of samples 1 to 6**

| Sample | Sample mass (g) | BET surface area (m²/g) | Correlation coefficient |
|---|---|---|---|
| 1 | 6.2886 | 0.96 | 0.9999169 |
| 2 | 5.7789 | 0.58 | 0.9999443 |
| 3 | 8.7208 | 0.58 | 0.9999347 |
| 4 | 5.3411 | 1.30 | 09999053 |
| 5 | 4.9099 | 0.59 | 0.9998539 |
| 6 | 4.9750 | 0.56 | 0.9998757 |

### Pozzolanicity

Pozzolanicity was tested using the R3 ("Rapid, Relevant and Reliable") Rilem test. The R3 test allows to rank the pozzolanicity of a (potential) SCM in a time frame much shorter than the calcium hydroxide consumption test, which is the most used method. The repeatability is also better.

The R3 test employs an isothermal calorimetry measurement, carried out on model mixes at 40°C. Those mixes are composed of the material to test, portlandite and gypsum, with the following proportions: iron silicate-to-portlandite weight ratio 1:3 and SO₃/Al₂O₃ molar ratio 1. Gypsum is added to reach that ratio. Finally, the powder is mixed with a 0.5 M KOH solution to reach a water-to-solid ratio of 1. The heat flow was recorded at 40°C up to 7 days of hydration.

The data are presented in Table 7 as the cumulative normalized heat (J/g total powder) produced up to 168 hours, i.e., 7 days. The more produced heat, the more reactive the material. A commercial fly ash is shown as a comparison, sample 7.

Samples 1 and 4 having 5°C/min cooling history exhibit the lowest pozzolanicity (approx. 20 J/g powder at 7 days). This is due to the formation of less-reactive crystalline phases. No significant difference between the samples with a quenching from 1300 and 1400 °C is observed. The samples with added CaO (2 and 3) have a pozzolanicity of between 40 and 50 J/g powder, which is comparable to what is obtained with the commercial coal fly ash (shown in sample 7). However, when the content of SiO₂ is increased and the samples quenched (samples 5 and 6), the pozzolanicity is significantly higher, with approximately 65 J/g powder after 7 days of hydration.

**Table 7. Cumulative heat at 7 days**

| Sample | Cumulative heat at 7 days [J/g powder] |
|---|---|
| 1 | 19 |
| 2 | 45 |
| 3 | 42 |
| 4 | 22 |
| 5 | 65 |
| 6 | 64 |
| 7 | 38 |

## Claims

1. A supplementary cementitious material (SCM) comprising, on a dry basis,
iron silicate having the chemical formula 2FeO·x SiO₂, where x is 1.05-2.50, the iron silicate being the balance of the supplementary cementitious material,
0-4 % by weight of aluminium comprised in aluminium containing compounds, and
0-7 % by weight of chain breaking elements,
wherein the chain breaking elements are selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof,
0-4 % by weight of trace elements and/or naturally occurring impurities, wherein
the supplementary cementitious material has a weight ratio of iron from the iron silicate to silicon of the iron silicate and aluminium from the aluminium containing compounds, Fe:(Si and Al), of 1.7-5.0.

2. The supplementary cementitious material according to claim 1, wherein the supplementary cementitious material has an amorphous content of at least 95 % by weight, preferably at least 97% by weight, preferably at least 98%, most preferably at least 99 % by weight, on a dry basis, measured using X-ray diffraction (XRD).

3. The supplementary cementitious material according to any one of claims 1 or 2, wherein the amount of metallic iron in the supplementary cementitious material is less than 2 % by weight of the supplementary cementitious material.

4. The supplementary cementitious material according to any one of the preceding claims, wherein x of the chemical formula 2FeO·xSiO₂ is 1.05-2.00, preferably 1.15-2.00, preferably 1.30-2.00, and preferably 1.45-2.00.

5. The supplementary cementitious material according to any one of the preceding claims, wherein the weight ratio of iron from the iron silicate to silicon of the iron silicate and aluminium from the aluminium containing compounds, Fe:(Si and Al), is 1.8-4.6, preferably 1.8-4.4, preferably 1.8-4.2, preferably 1.8-4.0, preferably 1.8-4.0, preferably 1.8-3.9, and preferably 1.8-3.8, and preferably 1.8-3.5.

6. The supplementary cementitious material according to any one of the preceding claims, wherein the chain breaking elements is present in the SCM in amount of 0.1 %-7 % by weight based on the total amount of supplementary cementitious material.

7. The supplementary cementitious material according to claim 6, wherein the chain breaking elements present in the SCM comprises CaO.

8. The supplementary cementitious material according to any one of the preceding claims, wherein the aluminium present in aluminium containing compounds is present in the SCM in an amount of 0.1 %-4 % by weight based on the total amount of supplementary cementitious material, such as in an amount of 2-4% by weight based on the total amount of supplementary cementitious material.

9. The supplementary cementitious material according to any one of the preceding claims, wherein the supplementary cementitious material has an average particle diameter (D50) of 1-70 µm, preferably 2-60 µm, preferably 5-50 µm preferably 8-50 µm, preferably 10-40 µm, preferably 10-30 µm, calculated on a weight basis, as measured using a Mastersizer laser diffraction instrument from Malvern Industries.

10. The supplementary cementitious material according to any one of the preceding claims, wherein the supplementary cementitious material in the form of a granulate, or a powder and has a BET specific surface area (SSA) of at least 0.5 m²/g, preferably 0.5-2 m²/g, preferably 0.55-1.7 m²/g, preferably 0.6-1.5 m²/g, by gas adsorption according the BET-method described herein, measured using a TriStar 3000 from Micromeritics.

11. The supplementary cementitious material according to any one of the preceding claims, wherein the supplementary cementitious material is in the form of a granulate or a powder having a pozzolanicity of at least 52 mJ/g, preferably at least 55 mJ/g, preferably at least 58 mJ/g, preferably at least 60 mJ/g, preferably at least 62 mJ/g of said supplementary cementitious material, according to RILEM R3 (Rapid, Relevant, and Reliable), measured using isothermal calorimetry measurement.

12. A cementitious material comprising a supplementary cementitious material as defined in any one of claims 1-11 and CaO.

13. A construction material comprising a cementitious material according as defined in claim 12 and an aggregate material.

14. A method of producing supplementary cementitious material according to any one of claims 1-11, comprising the steps of:
- providing a melt at a temperature T1 in the range of 1200-1500 °C, the melt comprising iron silicate and optionally chain breaking elements being selected from the group consisting of calcium oxide (CaO), magnesium oxide, (MgO), sodium oxide (Na₂O), barium oxide (BaO), strontium oxide (SrO), manganese (II) oxide (MnO), zinc oxide (ZnO), beryllium oxide (BeO), or any combination thereof;
- optionally providing an aluminium containing element to the melt;
- quenching the slag in liquid, thereby solidifying the melt to form the supplementary cementitious material as defined in any one of claims 1-11.

15. The method according to claim 15, wherein the quenching is performed for a time period t1, during which time period t1 the temperature of the slag is lowered from temperature T1 to a temperature T2 of less than 100 °C.

16. Use of supplementary cementitious material according to any one of claims 1-11, in cement production.
